# EUROPÄISCHE PATENTSCHRIFT

(11) **EP 1 835 264 B1**
(45) Veröffentlichungstag und Bekanntmachung des Hinweises auf die Patenterteilung: **07.10.2015**
(21) Anmeldenummer: 06026000.7
(22) Anmeldetag: 15.12.2006
(51) Int. Cl.: G01D 11/24, G01F 15/14, G05B 19/042, H05K 5/06

(54) **Nichteigensicher gespeistes Messgerät**
Measuring device with not intrinsically safe feed
Appareil de mesure alimenté directement sans sécurité intrinsèque

(30) Priorität: 01.03.2006 DE 102006009827
(43) Veröffentlichungstag der Anmeldung: 19.09.2007
(73) Patentinhaber: KROHNE MESSTECHNIK GMBH & CO. KG, 47058 Duisburg (DE)
(72) Erfinder: Florin, Wilhelm, 47198 Duisburg (DE); Brockhaus, Helmut, 46147 Oberhausen (DE); Lehmkuhl, Jürgen, 46535 Dinslaken (DE); Stelz, Wolfgang, 46047 Oberhausen (DE)
(74) Vertreter: Gesthuysen Patent- und Rechtsanwälte

(56) Entgegenhaltungen:
- WO-A1-2005/036134
- DE-A1- 3 711 754
- DE-A1- 19 803 543

## Beschreibung

Die Erfindung betrifft ein nichteigensicher gespeistes Meßgerät, mit einer in der Zündschutzart "Erhöhte Sicherheit (E-xe)" ausgeführten Anschlußeinrichtung zum Anschließen des Meßgeräts an einen Speiseanschluß, um das Meßgerät mit elektrischer Energie zu versorgen, einer Elektronikkomponenten des Meßgeräts enthaltenden Elektronikeinrichtung, einer Anzeigeeinrichtung, einem in der Zündschutzart "Erhöhte Sicherheit (Ex-e)" oder "Eigensicherheit (ex-i)" ausgeführten Sensor und einem zumindest nicht in der Zündschutzart "Eigensicherheit (Ex-i)" ausgeführten Ausgangskreis.

Beim Betrieb eines elektrischen Geräts in einer explosiven Atmosphäre geht von elektrischen Funken an den Schaltern und elektrischen Übergängen des Meßgeräts eine Zündgefahr aus. Im übrigen kann es zu einer Zündung an heißen Oberflächen des Meßgeräts kommen. Um ein elektrisches Meßgerät in einem explosionsgefährdeten Bereich betreiben zu können, sind daher Maßnahmen des Explosionsschutzes erforderlich.

In Europa ist der Explosionsschutz durch die ATEX-Norm geregelt. Der Explosionsschutz für elektrische Geräte ist dabei in den Normen DIN EN 50014 bis 50028 und EN 60079 festgelegt. Die Grundlagen des Explosionsschutzes sind in der Norm DIN EN 50014 beschrieben, während die nachfolgenden Normen die einzelnen Zündschutzarten beschreiben. Die Norm DIN EN 60079 beschreibt schließlich die Installation von in einer bestimmten Zündschutzart ausgeführten Betriebsmitteln am Ort ihres Einsatzes.

Grundsätzlich gilt, daß überall, wo entzündliche Medien, wie Gase und Dämpfe, in hinreichend hohen Konzentrationen auftreten und sich mit Luft oder reinem Sauerstoff vermischen können, eine Explosionsgefahr besteht. Solche explosionsgefährdeten Bereiche findet man typischerweise in und um Anlagen der chemischen Industrie und des Bergbaus, jedoch auch in anderen Bereichen, wie bei Abfüllanlagen für hochprozentige Spirituosen oder bei Getreidesilos.

Grundsätzlich gibt es zwei unterschiedliche Möglichkeiten, dort Explosionen entgegenzuwirken, nämlich den sogenannten "primären" bzw. "sekundären" Explosionsschutz. Dabei beruht der "primäre" Explosionsschutz auf der Vermeidung von entzündlichen Medien. Eine Vermeidung entzündlicher Medien wird sich jedoch häufig nicht realisieren lassen, da häufig gerade in der Verwendung eines bestimmten entzündlichen Mediums das Wesen eines Prozesses oder Herstellungsverfahrens liegt. In einem solchen Fall müssen dann Maßnahmen des "sekundären" Explosionsschutzes angewendet werden, also in der Vermeidung von Zündquellen, die die explosive Atmosphäre entzünden können.

Die Maßnahmen, die an elektrischen Betriebsmitteln getroffen werden, um die Zündung einer diese umgebende explosionsfähigen Atmosphäre zu verhindern, werden in die weiter oben schon angesprochenen Zündschutzarten unterteilt. Dabei können in einem Betriebsmittel eine oder mehrere dieser Zündschutzarten realisiert sein, um den gewünschten Explosionsschutz zu erzielen.

Die DE 3711754 A1 offenbart ein explosionsgeschütztes DurchflußMeßgerät nach dem Stand der Technik.

Bei dem eingangs beschriebenen Meßgerät soll eine in der Zündschutzart "Erhöhte Sicherheit (Ex-e)" ausgeführte Anschlußeinrichtung zum Anschließen an einen Speiseanschluß zum Versorgen des Meßgeräts mit elektrischer Energie vorgesehen sein. Dabei bedeute die Zündschutzart "Erhöhte Sicherheit", kurz mit "Ex-e" bezeichnet, daß Maßnahmen ergriffen sind, die die Wahrscheinlichkeit von Funkenbildung und erhöhter Temperatur verringern. Im Normalbetrieb darf damit keine Zündquelle vorliegen. Typischerweise wird dies durch eine Überdimensionierung der verwendeten Teile sowie hinreichend hohe Abstände zwischen Stellen erreicht, zwischen denen ein Funke übertreten könnte.

Im übrigen soll bei dem eingangs beschriebenen Meßgerät ein Sensor vorgesehen sein, der z. B. in der Schutzart "Eigensicherheit", kurz "Ex-i", ausgeführt ist. Dabei beschreibt die Zündschutzart "Eigensicherheit" Maßnahmen, bei denen die Energie im Stromkreis auf Werte begrenzt wird, die keine unzulässig hohen Temperaturen und/oder Zündfunken bzw. Lichtbögen zuläßt, die die für eine Explosion erforderliche Zündenergie besitzen. Dabei ist wesentlich, daß sich die Eigensicherheit nicht auf ein einzelnes Betriebsmittel bezieht, sondern auf den gesamten eigensicheren Stromkreis. Zu einem solchen eigensicheren Stromkreis gehören neben den Verbindungsleitungen wenigstens ein eigensicheres Betriebsmittel und ein zugehöriges Betriebsmittel.

Als eigensicheres Betriebsmittel wird dabei ein derartiges Betriebsmittel verstanden, bei dem nach Definition alle Stromkreise eigensicher sind. Das heißt, daß Spannung und Strom im eigensicheren Stromkreis so klein sind, daß bei Kurzschluß, Unterbrechung oder Erdschluß keine Zündung erfolgt, also die Zündenergie kleiner ist als die Mindestzündenergie zur Zündung der explosiven Umgebung. Im Gegensatz zu den im folgenden beschriebenen zugehörigen Betriebsmitteln sind eigensichere Betriebsmittel für den Betrieb direkt im explosionsgefährdeten Bereich geeignet.

Als zugehöriges Betriebsmittel im Rahmen der Zündschutzart "Eigensicherheit" wird ein derartiges Betriebsmittel verstanden, in dem nicht alle Stromkreise eigensicher sind. Jedoch enthält ein zugehöriges Betriebsmittel mindestens einen eigensicheren Kreis, der in den explosionsgefährdeten Bereich hineingeführt werden kann. Im allgemeinen wird also in einem zugehörigen Betriebsmittel ein nichteigensicheres Signal in ein eigensicheres Signal umgesetzt. Damit kann ein zugehöriges Betriebsmittel z. B. ein in einer anderen Zündschutzart ausgeführtes Betriebsmittel sein.

Bei nichteigensicher gespeisten Meßgeräten mit einer Elektronikkomponenten des Meßgeräts enthaltenen Elektronikeinrichtung, wie eingangs beschrieben, ist diese Elektronikeinrichtung häufig in der Zündschutzart "Druckfeste Kapselung", kurz "Ex-d" ausgeführt, was bedeutet, daß die Elektronikeinrichtung mit einer derartigen Kapselung versehen ist, die im Fall einer Zündung im Inneren der Kapselung gewährleistet, daß das Gehäuse der Kapselung dem Druck Stand hält, wobei eine Übertragung der Explosion im Inneren der Kapselung in den Außenbereich dadurch ausgeschlossen werden muß, daß die Spaltbreiten der Öffnungen aus der Kapselung heraus, also z. B. um Durchführungen für elektrische Anschlüsse zu realisieren, entsprechend gering gehalten werden.

Die Ausführung der Elektronikeinrichtung in der Zündschutzart "Druckfeste Kapselung" hat damit eine Vielzahl von Nachteilen: Durch die Kapselung wird die Elektronikeinrichtung sehr schwer, wobei im übrigen auch nur eine geringe Freiheit bezüglich der Formgebung besteht. Druckfeste Kapselungen werden nämlich aus Stabilitätsgründen meistens rund bzw. kugelförmig ausgeführt. Darüber hinaus müssen wegen der angesprochenen, nur geringen zulässigen Spaltweiten aufwendige Kabeldurchführungen für Anschlüsse von weiteren Komponenten an die Elektronikeinrichtung vorgesehen werden.

Es ist nun die Aufgabe der Erfindung, ein derartiges nichteigensicher gespeistes Meßgerät anzugeben, daß einfach und kostengünstig herstellbar ist und gleichwohl in einem explosionsgefährdeten Bereich sicher betrieben werden kann.

Ausgehend von dem eingangs beschriebenen Meßgerät ist diese Aufgabe dadurch gelöst, daß die Elektronikeinrichtung in der Zündschutzart "Vergußkapselung (Ex-m)" ausgeführt ist, die Anzeigeeinrichtung in der Zündschutzart "Eigensicherheit (Ex-i)" ausgeführt ist und die Anzeigeeinrichtung, der Sensor und der Ausgangskreis über in der Zündschutzart "Erhöhte Sicherheit (Ex-e)" ausgeführte Anschlüsse mit der Elektronikeinrichtung verbunden sind.

Unter der Zündschutzart "Vergußkapselung" versteht man dabei eine derartige Einbettung der potentiellen Zündquelle in eine Vergußmasse, daß eine gefährliche explosionsfähige Atmosphäre nicht entzündet werden kann. Damit geht die Erfindung einen völlig neuen Weg, indem die Elektronikeirunichtung nicht mehr aufwendig in der Zündschutzart "Druckfeste Kapselung" ausgeführt werden muß, sondern in der Zündschutzart "Vergußkapselung" in Kombination mit einer eigensicher ausgebildeten Anzeigeeinrichtung und in der Zündschutzart "Erhöhte Sicherheit" ausgeführten Anschlüssen. Damit entfallen aufwendige Leitungsdurchführungen, die Anzeigeeinrichtung muß nicht innerhalb einer druckfesten Kapselung vorgesehen sein, was ferner das Vorsehen eines druckfesten Sichtfensters vermeidet, und im übrigen besteht für die Ausgestaltung der Elekironikeinrichtung und deren Gehäuse weitestgehende Formfreiheit.

Für die Realisierung des Ausgangskreises gibt es verschiedene Möglichkeiten. Gemäß einer bevorzugten Weiterbildung der Erfindung kann als Ausgangskreis jedoch ein Feldbus vorgesehen sein, wie der "Profibus PA" oder der "Profibus DP", wobei hier eine eigensichere und alternativ eine nichteigensichere Ausgestaltung möglich ist.

Gemäß einer bevorzugten Weiterbildung der Erfindung sind ferner wenigstens zwei zumindest nicht in der Zündschutzart "Eigensicherheit" ausgeführte Ausgangskreis vorgesehen. Gemäß einer ganz bevorzugten Weiterbildung der Erfindung sind schließlich drei zumindest nicht in der Zündschutzart "Eigensicherheit" ausgeführte Ausgangskreise vorgesehen, nämlich vorzugsweise ein Stromausgang, ein Pulsausgang und ein Statusausgang.

Gemäß einer bevorzugten Weiterbildung der Erfindung ist ferner vorgesehen, daß die Anzeigeeinrichtung von der Elektronikeinrichtung gespeist wird. Das heißt, daß die Anzeigeeinrichtung über die in der Zündschutzart "Erhöhte Sicherheit" ausgeführten Anschlüsse von der Elektronikeinrichtung in eigensichere Weise mit elektrischer Energie versorgt wird.

Eingangs ist ausgeführt worden, daß das erfindungsgemäße Meßgerät auf nichteigensichere Weise gespeist wird. Gemäß einer bevorzugten Weiterbildung der Erfindung ist das Meßgerät dazu an einen Speiseanschluß in Form eines Standard-Netzanschlusses oder eines Standardniederspannungs-Anschlusses, wie eines Standard-24V-Anschlusses, anschließbar. Wesentlich ist also, daß für das erfindungsgemäße Meßgerät ein Speiseanschluß vorgesehen werden kann, der nicht der Zündschutzart "Eigensicherheit" unterliegen muß.

Grundsätzlich kann das erfindungsgemäße Meßgerät in einer Vielzahl unterschiedlicher Arten von Meßgeräten verkörpert sein. Gemäß einer bevorzugten Weiterbildung der Erfindung ist jedoch vorgesehen, daß das Meßgerät ein magnetisch-induktives Durchflußmeßgerät zur Messung des Durchflusses eines strömenden Mediums durch ein Meßrohr ist, mit in der Zündschutzart "Erhöhte Sicherheit (Ex-e)" ausgeführten Feldspulen zum Erzeugen eines das strömende Medium durchsetzenden Magnetfelds und mit in der Zündschutzart "Eigensicherheit (Ex-i)" ausgeführten Elektroden zum Abgreifen einer in dem strömenden Medium induzierten Spannung.

Gemäß einer anderen bevorzugten Weiterbildung der Erfindung ist vorgesehen, daß das Meßgerät ein Ultraschalldurchflußmeßgerät zur Messung des Durchflusses eines strömenden Mediums durch ein Meßrohr ist, mit in der Zündschutzart "Eigensicherheit (Ex-i)" ausgeführten Ultraschalltransducern zum Senden bzw. Empfangen von durch das strömende Medium laufenden Ultraschallsignalen.

Schließlich ist es gemäß einer anderen bevorzugten Weiterbildung der Erfindung vorgesehen, daß das Meßgerät ein Coriolis-Massendurchflußmeßgerät zur Messung des Durchflusses eines strömenden Mediums durch ein Meßrohr ist, mit wenigstens einem Schwingungserzeuger zum Anregen von Schwingungen des Meßrohrs, wenigstens einem Schwingungssensor zum Erfassen der erzeugten Schwingungen des Meßrohrs, einem von der Elektronikeinrichtung abgesetzten, in der Zündschutzart "Eigensicherheit (Ex-i)" gespeisten Elektronik-Frontend zum Anschluß an den Schwingungserzeuger und den Schwingungssensor und einer von dem Elektronik-Frontend abgehenden, ebenfalls in der Zündschutzart "Eigensicherheit (Ex-i)" ausgeführten Signalleitung.

Zuvor ist schon ausgeführt worden, daß die Anzeigeeinrichtung, der Sensor und der Ausgangskreis über in der Zündschutzart "Erhöhte Sicherheit" ausgeführte Anschlüsse mit der Elektronikeinrichtung verbunden sind. Diesbezüglich ist gemäß einer bevorzugten Weiterbildung der Erfindung vorgesehen, daß dazu einer Mehrzahl von Anschlußklemmen an der Elektronikeinrichtung vorgesehen ist, die alle auf einer gemeinsamen Seite der Elektronikeinrichtung angeordnet sind. Diese Anschlußklemmen sind jeweils bereichsweise vergossen, führen also zu der in Vergußkapselung vorgesehene Elektronikeinrichtung und ragen auf der anderen Seite aus der Vergußkapselung heraus, so daß sie als galvanisch leitende Kontakte zur Verfügung stehen.

In diesem Zusammenhang ist es gemäß einer bevorzugten Weiterbildung der Erfindung ferner vorgesehen, daß die Elekronikeinrichtung in einem, vorzugsweise aus Kunststoff ausgebildeten, Becher vorgesehen ist und dieser Becher vergossen ist. Auf diese Weise wird eine besonders einfache und kostengünstige Herstellung der Elektronikeinrichtung erzielt.

Nachfolgend wird ein bevorzugtes Ausführungsbeispiel der Erfindung unter Bezugnahme auf die Zeichnung im einzelnen erläutert. In der Zeichnung zeigt
- Fig. 1: schematisch ein Meßgerät gemäß einem bevorzugten Ausführungsbeispiel der Erfindung und
- Fig. 2: die in einem Becher vorgesehene und in diesen vergossene Elektronikeinrichtung des Meßgeräts gemäß dem bevorzugten Ausführungsbeispiel der Erfindung.

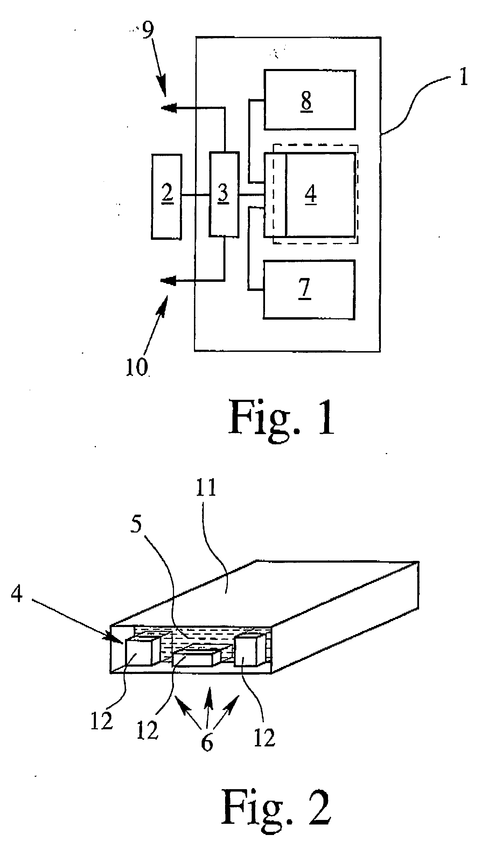

Aus Fig. 1 ist schematisch ein Meßgerät 1 gemäß einem bevorzugten Ausführungsbeispiel der Erfindung ersichtlich, das über einen Speiseanschluß 2 in nichteigensicherer Weise gespeist wird. Bei dem Speiseanschluß 2 kann es sich um einen Standard-Netzanschluß (110 V/ 220 V) oder einen Standard-Niederspannungs-Anschluß, wie einen Standard-24V-Anschluß, handeln.

Zum Anschluß an den Speiseanschluß 2 weist das Meßgerät 1 eine Anschlußeinrichtung 3 auf Diese Anschlußeinrichtung 3 weist die eigentlichen Anschlußmöglichkeiten zum Anschließen an einen Speiseanschluß 2 auf sowie die üblichen, im einzelnen nicht weiter dargestellten I/O-Kreise. Die Anschlußeinrichtung 3 ist in der Zündschutzart "Erhöhte Sicherheit" ausgeführt, d. h. derart dimensioniert, daß im Betrieb des Meßgeräts keine zündfähigen Funken erzeugt werden können.

Mit der Anschlußeinrichtung 3 ist eine Elektronikeinrichtung 4 verbunden, die alle Elektronikkomponenten des Meßgeräts enthält. Maßgeblich ist nun, daß die Elektronikeinrichtung 4 in der Zündschutzart "Vergußkapselung" ausgeführt ist, sich insgesamt also innerhalb eines Vergusses 5 befindet. Als Zuleitungen zu den nicht im einzelnen dargestellten Elektronikkomponenten der Elektronikeinrichtung 4 sind in der Zündschutzart "Erhöhte Sicherheit" ausgeführte Anschlüsse 6 vorgesehen, die einseitig in den Verguß 5 hineinragen und auf der anderen Seite galvanisch leitende Anschlußmöglichkeiten bilden.

Wie schon ausgeführt, ist über diese Anschlüsse 6 die Elektronikeinrichtung 4 mit der Anschlußeinrichtung 3 verbunden. Ferner sind über diese Anschlüsse 6 ein Sensor 7 sowie eine Anzeigevorrichtung 8 mit der Elektronikeinrichtung 4 verbunden. Dabei ist der Sensor 7 entweder in der Zündschutzart "Erhöhte Sicherheit" oder in der Zündschutzart "Eigensicherheit" ausgeführt.

Im Falle, daß es sich bei dem Meßgerät gemäß dem bevorzugten Ausführungsbeispiel der Erfindung um ein magnetisch-induktives Durchflußmeßgerät zur Messung des Durchflusses eines strömenden Mediums durch ein Meßrohr handelt, sind in der Zündschutzart "Erhöhte Sicherheit" ausgeführte Feldspulen zum Erzeugen eines das strömende Medium durchsetzenden Magnetfelds und in der Zündschutzart "Eigensicherheit" ausgeführte Elektroden zum Abgreifen einer in dem strömenden Medium induzierten Spannung vorgesehen.

Falls es sich bei dem Meßgerät gemäß dem bevorzugten Ausführungsbeispiel der Erfindung um ein Ultraschalldurchflußmeßgerät zur Messung des Durchflusses eines strömenden Mediums durch ein Meßrohr handelt, sind in der Zündschutzart "Eigensicherheit" ausgeführte Ultraschalltransducer zum Senden bzw. Empfangen von durch das strömende Medium laufenden Ultraschallsignalen vorgesehen.

Ist schließlich als Meßgerät gemäß dem bevorzugten Ausführungsbeispiel der Erfindung ein Coriolis-Massendurchflußmeßgerät zur Messung des Durchflusses eines strömenden Mediums durch ein Meßrohr vorgesehen, mit wenigstens einem Schwingungserzeuger zum Anregen von Schwingungen des Meßrohrs und wenigstens einem Schwingungssensor zum Erfassen der erzeugten Schwingungen des Meßrohrs, so sind zusätzlich zu der Elektronikeinrichtung 4 ein in der Zündschutzart "Eigensicherheit" gespeistes Elektronäk-Frontend zum Anschluß an den Schwingungserzeuger und den Schwingungssensor und eine von dem Elektronik-Frontend abgehende, ebenfalls in der Zündschutzart "Eigensicherheit" ausgeführte Signalleitung vorgesehen.

Bei dem vorliegend beschriebenen Meßgerät gemäß dem bevorzugten Ausführungsbeispiel der Erfindung sind zwei Ausgangskreise 9, 10 vorgesehen, die beide nicht in der Zündschutzart "Eigensicherheit" ausgeführt sind. Die Anzeigeeinrichtung 8 ist ebenfalls über die Anschlüsse 6 mit der Elektronikeinrichtung verbunden, wobei die Anzeigeeinrichtung 8 in der Zündschutzart "Eigensicherheit" ausgeführt ist und von der Elektronikeinrichtung 4 in eigensicherer Weise gespeist wird.

Aus Fig. 2 ist nun in einer schematischen Ansicht die Elektronikeinrichtung 4 des Meßgeräts gemäß dem bevorzugten Ausführungsbeispiel der Erfindung ersichtlich. Dabei befindet sich die Elektronikeinrichtung 4 innerhalb eines aus Kunststoff ausgebildeten Bechers 11 und ist mit einem Verguß 5 versehen. Aus diesem Verguß 5 ragen lediglich die Anschlüsse 6 heraus, die von einer Mehrzahl von Anschlußklemmen 12 gebildet werden. Durch die Anordnung dieser Anschlußklemmen 12 auf einer gemeinsamen Seite kann damit eine besonders einfache und kostengünstig herstellbare Ausführung der Elektronikeinrichtung 4 erzielt werden.

Dabei ergeben sich insgesamt wesentliche Vorteile dadurch, daß keine aufwendigen Leitungsdurchführungen erforderlich sind, die Anzeigeeinrichtung nicht innerhalb einer druckfesten Kapselung vorgesehen sein muß, was das Vorsehen eines druckfesten Sichtfensters, vermeidet, und für die Ausgestaltung der Elektronikeinrichtung und deren Gehäuse weitestgehende Formfreiheit besteht.

## Patentansprüche

1. Nichteigensicher gespeistes Meßgerät (1) mit einer in der Zündschutzart "Erhöhte Sicherheit (Ex-e)" ausgeführten Anschlußeinrichtung (3) zum Anschließen des Meßgeräts (1) an einen Speiseanschluß (2), um das Meßgerät (1) mit elektrischer Energie zu versorgen, einer Elektronikkomponenten des Meßgeräts (I) enthaltenden Elektronikeinrichtung (4), einer Anzeigeeinrichtung (8), einem in der Zündschutzart "Erhöhte Sicherheit (Ex-e)" oder "Eigensicherheit (Ex-i)" ausgeführten Sensor (7) und einem zumindest nicht in der Zündschutzart "Eigensicherheit (Ex-i)" ausgeführten Ausgangskreis (9), **dadurch gekennzeichnet, daß** die Elektronikeinrichtung (4) in der Zündschutzart "Vergußkapselung (Ex-m)" ausgeführt ist, die Anzeigeeinrichtung (8) in der Zündschutzart "Eigensicherheit (Ex-i)" ausgeführt ist und die Anzeigeeinrichtung (8), der Sensor (7) und der Ausgangskreis (9) über in der Zündschutzart "Erhöhte Sicherheit (Ex-e)" ausgeführte Anschlüsse (6) mit der Elektronikeinrichtung (4) verbunden sind.

2. Meßgerät nach Anspruch 1, **dadurch gekennzeichnet, daß** als Ausgangskreis (9) ein Feldbus vorgesehen ist, wie der "Profibus PA" oder der "Profibus DP".

3. Meßgerät nach Anspruch 1 oder 2, **dadurch gekennzeichnet, daß** wenigstens zwei zumindest nicht in der Zündschutzart "Eigensicherheit (Ex-i)" ausgeführte Ausgangskreise (9, 10) vorgesehen sind.

4. Meßgerät nach Anspruch 3, **dadurch gekennzeichnet, daß** drei zumindest nicht in der Zündschutzart "Eigensicherheit (Ex-i)" ausgeführte Ausgangskreise vorgesehen sind, nämlich ein Stromausgang, ein Pulsausgang und ein Statusausgang.

5. Meßgerät nach einem der Ansprüche 1 bis 4, **dadurch gekennzeichnet, daß** die Anzeigeeinrichtung (8) von der Elektronikeinrichtung (4) gespeist wird.

6. Meßgerät nach einem der Ansprüche 1 bis 5, **dadurch gekennzeichnet, daß** das Meßgerät an einen zumindest nicht in der Zündschutzart "Eigensicherheit (Ex-i)" ausgebildeten Speiseanschluß in Form eines Standard-Netzanschlusses oder eines Standard-Niederspannungs-Anschlusses, wie eines Standard-24V-Anschlusses, anschließbar ist.

7. Meßgerät nach einem der Ansprüche 1 bis 6, **dadurch gekennzeichnet, daß** das Meßgerät (1) ein magnetisch-induktives Durchflußmeßgerät zur Messung des Durchflusses eines strömenden Mediums durch ein Meßrohr ist, mit in der Zündschutzart "Erhöhte Sicherheit (Ex-e)" ausgeführten Feldspulen zum Erzeugen eines das strömende Medium durchsetzenden Magnetfelds und mit in der Zündschutzart "Eigensicherheit (Ex-i)" ausgeführten Elektroden zum Abgreifen einer in dem strömenden Medium induzierten Spannung.

8. Meßgerät nach einem der Ansprüche 1 bis 6, **dadurch gekennzeichnet, daß** das Meßgerät (1) ein Ultraschalldurchflußmeßgerät zur Messung des Durchflusses eines strömenden Mediums durch ein Meßrohr ist, mit in der Zündschutzart "Eigensicherheit (Ex-i)" ausgeführten Ultraschalltransducern zum Senden bzw. Empfangen von durch das strömende Medium laufenden Ultraschallsignalen.

9. Meßgerät nach einem der Ansprüche 1 bis 6, **dadurch gekennzeichnet, daß** das Meßgerät ein Coriolis-Massendurchflußmeßgerät zur Messung des Durchflusses eines strömenden Mediums durch ein Meßrohr ist, mit wenigstens einem Schwingungserzeuger zum Anregen von Schwingungen des Meßrohrs, wenigstens einem Schwingungssensor zum Erfassen der erzeugten Schwingungen des Meßrohrs, einem von der Elektronikeinrichtung (4) abgesetzten, in der Zündschutzart "Eigensicherheit (Ex-i)" gespeisten Elektronik-Frontend zum Anschluß an den Schwingungserzeuger und den Schwingungssensor und einer von dem Elektronik-Frontend abgehenden, ebenfalls in der Zündschutzart "Eigensicherheit (Ex-i)" ausgeführten Signalleitung.

10. Meßgerät nach einem der Ansprüche 1 bis 9, **dadurch gekennzeichnet, daß** die Elektronikeinrichtung (4) einer Mehrzahl von Anschlußklemmen (12) aufweist, die alle auf einer gemeinsamen Seite der Elektronikeinrichtung (4) vorgesehen sind.

11. Meßgerät nach Anspruch 10, **dadurch gekennzeichnet, daß** die Elektronikeinrichtung (4) in einem, vorzugsweise aus Kunststoff ausgebildeten, Becher (11) vorgesehen und in diesem Becher (11) vergossen ist.

## Claims

1. Non-intrinsically safely supplied measurement device (1) comprising a connecting means (3) for connecting of the measurement device (1) to a feed connection (2) to supply the measurement device (1) with electricity, the connecting means having an "increased safety (Ex-e)" type of protection, an electronic means (4) which contains electronic components of the measurement device (1), a display means (8), a sensor (7) that is provided with one of an "increased safety (Ex-e)" and an "intrinsic safety (Ex-i)" type of protection, and at least one output circuit (9) made without at least an "intrinsic safety (Ex-i)" type of protection, **characterized in that** the electronic means (4) has an "encapsulation (Ex-m)" type of protection, the display means (8) has an "intrinsic safety (Ex-i)" type of protection, and the display means (8), the sensor (7), and the output circuit (9) are connected to the electronic means (4) via connections (6) which have an "increased safety (Ex-e)" type of protection.

2. Measurement according to claim 1, **characterized in that** the output circuit (9) is a field bus like "Profibus A" or "Profibus DP".

3. Measurement device according to claim 1 or 2, **characterized in that** at least two output circuits (9, 10) made without at least an "intrinsic safety (Ex-i)" type of protection are provided.

4. Measurement device according to claim 3, **characterized in that** at least three output circuits made without at least an "intrinsic safety (Ex-i)" type of protection are provided, namely a current output, a pulse output and a status output.

5. Measurement device according to any one of claims 1 to 4, **characterized in that** the display means (8) is supplied by the electronic means (4).

6. Measurement device according to any one of claims 1 to 5, **characterized in that** the measurement device is connectable to a feed connection which is without at least an "intrinsic safety (Ex-i)" type of protection and is in the form of a standard power supply line or a standard low voltage connection, such as a standard 24V connection.

7. Measurement device according to any one of claims 1 to 6, **characterized in that** the measurement device (1) is a magnetic-inductive flow rate measuring device for measuring the flow rate of a flowing medium through a measurement tube, with field coils provided for producing a magnetic field which penetrates the flowing medium that are provided with an "increased safety (Ex-e)" type of protection and with electrodes for tapping a voltage induced in the flowing medium that have an "intrinsic safety (Ex-i)" type of protection.

8. Measurement device according to any one of claims 1 to 6, **characterized in that** the measurement device (1) is an ultrasonic flow rate measurement device for measuring the flow rate of a flowing medium through a measurement tube, with ultrasonic transducers for sending or receiving ultrasonic signals running through the flowing medium that have an "intrinsic safety (Ex-i)" type of protection.

9. Measurement device according to any one of claims 1 to 6, **characterized in that** the measurement device is a Coriolis mass flow rate measurement device for measuring the flow rate of a flowing medium through a measurement tube, with at least one vibration generator for exciting vibrations in the measurement tube, at least one vibration sensor for detecting the generated vibrations of the measurement tube, an electronic front end which is offset from the electronic means (4) for connection to the vibration generator and the vibration sensor and which has an "intrinsic safety (Ex-i)" type of protection, and a signal line which goes out from the electronic front end and which has an "intrinsic safety (Ex-i)" type of protection.

10. Measurement device according to any one of claims 1 to 9, **characterized in that** the electronic means (4) has a plurality of connecting terminals (12) which are all located on the same side of the electronic means (4).

11. Measurement device according to claim 10, **characterized in that** the electronic means (4) is provided in a cup (11), preferably shaped of plastic, and is potted in this cup (11).

## Revendications

1. Appareil de mesure (1) alimenté sans protection intrinsèque, présentant
un dispositif de raccordement (3) réalisé en mode de protection "sécurité accrue (Ex-e)" permettant de raccorder l'appareil de mesure (1) à une borne d'alimentation (2) pour alimenter l'appareil de mesure (1) en énergie électrique,
un dispositif électronique (4) contenant des composants électronique de l'appareil de mesure (1),
un dispositif d'affichage (8),
un capteur (7) réalisé en mode de protection "sécurité accrue (Ex-e)" ou "sécurité intrinsèque (Ex-i)" et un circuit de sortie (9) non réalisé au moins en mode de protection "sécurité intrinsèque (Ex-i)", **caractérisé en ce que**
le dispositif électronique (4) est réalisé en mode de protection "encapsulation (Ex-m)", le dispositif d'affichage (8) en mode de protection "sécurité intrinsèque (Ex-i)" et
**en ce que** le dispositif d'affichage (8), le capteur (7) et le circuit de sortie (9) sont raccordés au dispositif électronique (4) par des bornes de raccordement (6) réalisées en mode de protection "sécurité accrue (Ex-e)".

2. Appareil de mesure selon la revendication 1, **caractérisé en ce qu'**un bus de terrain, par exemple un "profibus PA" ou un "profibus DP", est prévu comme circuit de sortie (9).

3. Appareil de mesure selon les revendications 1 ou 2, **caractérisé en ce qu'**au moins deux circuits de sortie (9, 10) non réalisés au moins en mode de protection "sécurité intrinsèque (Ex-i)" sont prévus.

4. Appareil de mesure selon la revendication 3, **caractérisé en ce que** trois circuits de sortie, à savoir une sortie de courant, une sortie d'impulsions et une sortie de statut, non réalisés au moins en mode de protection "sécurité intrinsèque (Ex-i)" sont prévus.

5. Appareil de mesure selon l'une des revendications 1 à 4, **caractérisé en ce que** le dispositif d'affichage (8) est alimenté par le dispositif électronique (4).

6. Appareil de mesure selon l'une des revendications 1 à 5, **caractérisé en ce que** l'appareil de mesure peut être raccordé à une borne d'alimentation non réalisée au moins en mode de protection "sécurité intrinsèque (Ex-i)" et présentant la forme d'une borne standard de raccordement au réseau ou d'une borne standard de raccordement à une basse tension, par exemple une borne standard de 24 V.

7. Appareil de mesure selon l'une des revendications 1 à 6, **caractérisé en ce que** l'appareil de mesure (1) est un appareil de mesure magnétique-inductive de débit qui mesure le débit d'un fluide en écoulement et qui présente des bobines de terrain non réalisées au moins en mode de protection "sécurité accrue (Ex-e)" pour former un champ magnétique qui traverse le fluide en écoulement et des électrodes réalisées en mode de protection "sécurité intrinsèque (Ex-i)" pour prélever la tension induite dans le fluide en écoulement.

8. Appareil de mesure selon l'une des revendications 1 à 6, **caractérisé en ce que** l'appareil de mesure (1) est un appareil de mesure de débit par ultrasons qui mesure le débit d'un fluide en écoulement dans un tube de mesure et qui présente des transducteurs d'ultrasons réalisés en mode de protection "sécurité intrinsèque (Ex-i)" pour l'émission et la réception de signaux d'ultrasons qui traversent le fluide en écoulement.

9. Appareil de mesure selon l'une des revendications 1 à 6, **caractérisé en ce que** l'appareil de mesure (1) est un appareil de mesure de débit massique par Coriolis qui mesure le débit d'un fluide en écoulement dans un tube de mesure et qui présente au moins un oscillateur qui excite des oscillations par le tube de mesure, au moins un capteur d'oscillations qui saisit les oscillations provoquées dans le tube de mesure, une extrémité électronique avant destinée à être raccordée à l'oscillateur et au capteur d'oscillations, séparée du dispositif électronique (4) et alimentée en mode de protection "sécurité intrinsèque (Ex-i)" ainsi qu'un conducteur de signaux partant de l'extrémité électronique avant et également réalisée en mode de protection "sécurité intrinsèque (Ex-i)".

10. Appareil de mesure selon l'une des revendications 1 à 9, **caractérisé en ce que** le dispositif électronique (4) présente plusieurs bornes de raccordement (12) qui sont toutes prévues sur un côté commun du dispositif électronique (4).

11. Appareil de mesure selon la revendication 10, **caractérisé en ce que** le dispositif électronique (4) est prévu dans un godet (11) réalisé de préférence en matière synthétique et est encapsulé dans ce godet (11).
